# EUROPEAN PATENT APPLICATION

(11) **EP 3 168 456 A1**
(43) Date of publication of application: **17.05.2017**
(21) Application number: 16193243.9
(22) Date of filing: 11.10.2016
(51) Int. Cl.: F02N 11/12, H02J 7/00, F02N 11/14

(54) **STARTING DEVICE FOR A VEHICLE**

(30) Priority: 13.11.2015 IT UB20155555
(71) Applicant: Telwin S.p.A., 36030 Villaverla (VI) (IT)
(72) Inventor: MORATO, Antonino, 36030 VILLAVERLA (VI) (IT)
(74) Representative: Burchielli, Riccardo

(57) **Abstract**

A starting device for a vehicle, characterized by comprising a lithium battery (13) and a relay (10), which is controlled by an actuator (15), said actuator (15) being connected to a control logic unit (11) to which signals coming from a current sensor (12) connected to said lithium battery (13) of the starting device and to a battery (14) of said vehicle, as well as the voltage values of said lithium battery (13) and of said battery (14) of the vehicle, are sent.

## Description

The present invention generally relates to a starter device for a motor vehicle and, more particularly, relates to a device for interrupting the starting current for security reasons.

Until the early nineties, the start-up of vehicles with combustion engine, when the on-board battery was download, was performed with the aid of suitable external starters connected to the power supply network.

Said external starters were essentially constituted by battery chargers configured to deliver, through a suitable selection of the switches placed on the front panel, high current values required for starting the vehicle.

Obviously, to ensure said high current values required for starting the vehicle engine, said known battery charger had rather high load voltages, such as 15-18V for vehicle batteries having a voltage of 12V.

Said high values of load voltages could damage the vehicle's battery only in the case of extended connections to the terminals of the battery (about 5-10 minutes).

However, given that the start-up operation does not usually lasted more than one minute, said maximum times of 5-10 minutes were widely respected.

The above-mentioned starters, still on the market, are protected from short-circuits of the output terminals and from a possible reversal of polarity by means of a fuse; also, they are protected by means of thermal devices restorable from possible overloads during use.

However, since more and more electronic devices are installed in a vehicle, the maximum voltages of 15-18V provided by said starters can cause serious damage to the electronic components of the vehicle, so that many automotive companies advise against start-up operations, in case of need, by using said starters.

Since the mid-nineties have appeared on the market other types of starters, which are constituted by portable devices containing inside a lead-acid battery to be parallel connected with the battery terminals to start the vehicle's engine.

Said devices have solved the problem of possible damage caused to the electronic components of the vehicle due to an excessive load voltage.

The charging of the internal battery contained in said devices is carried out by means of a power supply socket or through the cigarette lighter socket of the vehicle.

Said devices are also protected from possible short circuits and/or polarity reversals of the output cables through the use of a replaceable fuse or with the use of a resettable fuse.

The above mentioned devices, however, have always had relevant drawbacks due to their size and especially to the weight of the lead-acid battery contained within the case and, on the other hand, lithium batteries and their technology have become more and more important, thanks to their use with huge amounts in the field of mobile telephony.

Therefore, new starter devices are now using; they have lithium batteries instead of lead batteries, because, even if the costs are considerably higher, the overall dimensions and weights are much lower (in particular, in terms of weight, a gain factor equal to 10 is obtained).

However, lithium batteries are more delicate than lead-acid batteries, because, in particular:
- while charging, it is necessary to balance the voltages of the cells,
- there is an upper limit of charging voltage that can not be exceeded for any reason,
- there is a lower limit of discharge voltage below which the battery will be damaged,
- the battery cannot support the occurrence of short circuits at its terminals, polarity inversions and long overloads at high current values, since said events cause soon a serious risk of damage and real principles of fire.

Therefore, all the starter devices equipped with lithium batteries still known are subjected to a risk of damage of the battery due to long overloads at high current values (just as happens during long starts of the vehicle) and, consequently, all the car's manufacturers advise against to end-users this abnormal use, for example by means of "warning" labels on the packaging and/or on the casing of the device and/or by means of further warnings in the instruction manuals.

An object of the present invention is therefore to obviate the above mentioned technical drawbacks and, in particular, a main object of the present invention is to provide a starting device for a vehicle's engine, which is equipped with lithium batteries and which avoids, at the same time, dangerous overloads at high current values, thus allowing to make prolonged starts.

Another object of the present invention is to provide a starting device for vehicles, which is reliable, safe, economical and more efficient than the known art.

The above aim and these and other objects that will become more clear hereinafter are achieved by a starting device for a vehicle's engine according to the appended claim 1; further technical features of the starting device according to the invention are given in the other dependent claims.

Advantageously, in order to avoid dangerous overloads, the starting device according to the invention is able to automatically stop the passage of current after a determined time period.

In particular, the device is able to safely interrupt continuous current levels of the order of 500-600A.

Said starting device, even if equipped with a lithium battery, is cheap and configured to interrupt the current supply during a starting phase of a vehicle's engine; in particular, the current supply is stopped when the temperature of the lithium battery of the device exceeds a dangerous threshold value, or when the value of the voltage at the battery's terminals drops below a critical threshold value.

The device of the present invention is also useful to prevent the current supply in case of short circuit of the output terminals, or in case of polarity reversal of said terminals (i.e. when the terminals are incorrectly connected to the vehicle's battery).

Finally, the device prevents the return current from the vehicle's battery to the lithium battery, when the engine has started, due to the generation of energy by the vehicle's alternator.

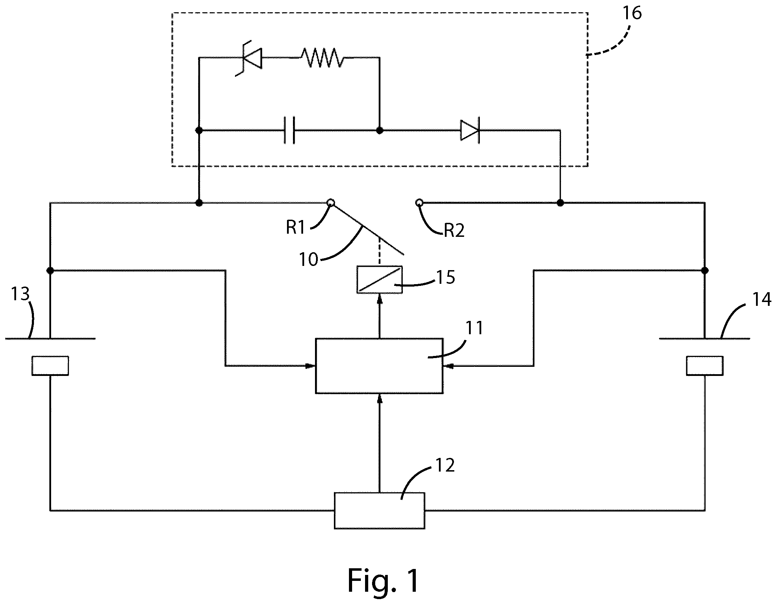

Further characteristics and advantages of the present invention will become more clear from the following description, related to a preferred embodiment of the starting device according to the present invention, and by the enclosed drawing (Fig. 1), which shows a circuit diagram of the starting device for vehicles according to the invention.

With reference to the above mentioned fig. 1, the starting device which is the object of the present invention substantially comprises a relay 10, which is controlled by an actuator 15 connected to a micro-processor control logic unit 11.

Moreover, a signal coming from a current sensor 12 is sent to the input of the control logic 11 and said current sensor 12 is connected, on one side, with the lithium battery 13 of the starting device and, on the other side, with the battery 14 of the vehicle.

The voltage values of the lithium battery 13 and of the vehicle's battery 14 are also sent to said control logic unit 11.

Finally, a spark-safe device 16 is parallel connected with the contacts R1, R2 of said relay 10.

The starting device for vehicles, according to the present invention, substantially works as follows.

During the starting phase of the vehicle the temperature and the voltage value of the lithium battery 13 are continuously controlled and the waveform of the current absorbed by the electric motor used for starting the vehicle is sampled by means of the control logic unit 11 and the current sensor 12.

Said starting current is changeable and has repetitive maximum peak values in correspondence of the compression phase of each cylinder of the vehicle and minimum values of repetitive absorption in the intermediate phases.

The optimal time instant for opening the relay 10, which, in case of need, allows to interrupt the starting current to be delivered to the electric motor of the vehicle, is the time instant which corresponds to the minimum absorption of currents by said electric motor, since in said conditions the spark-safe device 16 of the contacts R1, R2 of said relay 10 is stressed to a lesser extent.

When the temperature of the lithium battery 13 exceeds a threshold value which is considered dangerous, or when the value of the voltage at the terminals of the battery 13 falls below a minimum value which is considered harmful for its integrity, the relay 10 is opened by means of the actuator 15 when a first minimum current absorption occurs (said current absorption being detected by the control logic unit 11 according to the signals coming from the current sensor 12).

In any case, given the repetition of the current absorption (typically every 100ms) and given the fact that the temperature of the lithium battery goes up with slowness, as well as the voltage at the battery's terminals goes down with slowness, it is not strictly necessary to detect the first minimum current absorption, but just any minimum current absorption which follows. The invention thus conceived is susceptible to different modifications and variants, all falling within the protective scope of the appended claims.

Moreover, all the details may be replaced with other technically equivalent elements; practically, the materials employed, as well as the shapes and the dimensions, may be varied depending on the requirements and on the state of the art.

Where the constructional characteristics and techniques mentioned in the following claims are followed by reference signs or numbers, said signs and reference numbers have been applied with the sole purpose of increasing the intelligibility of the claims and consequently they do not constitute in any way a limit on the interpretation of each element which is identified by said signs and reference numbers.

## Claims

1. Starting device for a vehicle, **characterized by** comprising a lithium battery (13) and a relay (10), which is controlled by an actuator (15), said actuator (15) being connected to a control logic unit (11) to which signals coming from a current sensor (12) connected to said lithium battery (13) of the starting device and to a battery (14) of said vehicle, as well as the voltage values of said lithium battery (13) and of said battery (14) of the vehicle, are sent.

2. Starting device according to claim 1, **characterized in that** said device includes an anti-sparkling circuit (16), which is parallel connected to the contacts (R1, R2) of said relay (10).

3. Starting device according to at least one of the preceding claims, **characterized in that** said logic control unit (11), through said current sensor (12), constantly monitors, during a starting phase of said vehicle, the temperature and the voltage of said lithium battery (13) and samples the waveform of the current absorbed by the vehicle's engine during said starting phase of the vehicle, said current absorbed by said vehicle's engine having maximum and minimum values which are repeated and which are spaced out.

4. Starting device according to claim 3, **characterized in that** said relay (10) is opened by said actuator (15) and therefore stops the starting current to be delivered to said vehicle's engine during a time interval corresponding to at least one of said minimum values of current absorbed by said vehicle's engine.

5. Starting device according to claim 4, **characterized in that** said relay (10) is opened by said actuator (15) when the temperature of said lithium battery (13) exceeds a given threshold value.

6. Starting device according to claim 4, **characterized in that** said relay (10) is opened by said actuator (15) when the voltage at the terminals of said lithium battery (13) falls down below a given minimum threshold value.

7. Starting device according to at least one of the preceding claims, **characterized in that** said device is able to stop DC levels of about 500-600A.
